# EUROPEAN PATENT APPLICATION

(11) **EP 3 756 921 A1**
(43) Date of publication of application: **30.12.2020**
(21) Application number: 19781242.3
(22) Date of filing: 11.03.2019
(51) Int. Cl.: B60K 6/36, B60K 6/38, B60K 6/547

(54) **LONGITUDINALLY MOUNTED DUAL-POWER-SOURCE VEHICLE DRIVE ASSEMBLY**

(30) Priority: 04.04.2018 CN 201810301708
(71) Applicant: Jing-Jin Electric Technologies Co., Ltd, Beijing 100016 (CN)
(72) Inventor: YU, Ping, Beijing 100016 (CN); LI, Jianwen, Beijing 100016 (CN); WANG, Ruikun, Beijing 100016 (CN)
(74) Representative: Gotra, Stefano
(86) International application number: PCT/CN2019/077673
(87) International publication number: WO 2019/192292

(57) **Abstract**

A longitudinal dual-power-source vehicle drive assembly includes an automatic transmission (10), a first power source (71) and a second power source (72), wherein a transmission input shaft (21) and a transmission output shaft (32) of the automatic transmission (10) are coaxial, the transmission input shaft (21) is connected to an output shaft of the first power source (71), the transmission output shaft (32) is connected to an input shaft of the second power source (72), the output shaft of the second power source (72) is connected to the vehicle axle (50) half shaft, and the automatic transmission (10) has transmissions of two speed ratios. The present disclosure realizes functions of direct driving and speed change by using dual electric motors and direct driving and deceleration by using dual electric motors, forms transmissions of multiple speed ratios, has flexible transmission modes, reduces the radial dimension of the drive assembly, and has no power interruption in gear shifting, which improves the riding comfort, the power performance, the acceleration performance and the gradeability of the vehicle.

## Description

### TECHNICAL FIELD

The present disclosure relates to the technical field of new-energy vehicles, and particularly relates to a longitudinal dual-power-source vehicle drive assembly.

### BACKGROUND

Currently, the power characteristics of the electric motors employed by purely electric or hybrid-power new-energy vehicles have gaps with the requirements of the entire vehicles, and cannot satisfy the requirements on the speed ratios and the moments. Because new-energy vehicles are required to handle increasingly more complicated working conditions and road conditions, and the users have raised increasingly higher requirements on the comfort degree and the endurance mileage of new-energy vehicles, new-energy vehicles that employ the power mode of direct driving only by an electric motor, the power mode of an electric motor connected to a speed reducer, or the power mode of oil-electricity hybrid have become incapable of satisfying the requirements of the development of the industry of new-energy vehicles.

Current vehicles are usually provided with a single power source, the single power source is connected to a transmission, and the employed transmission is a second-gear, three-gear or four-gear transmission. In gear shifting the clutch is required to be disengaged, and in gear shifting the power is interrupted, in which case the power connection between the input shaft and the output shaft is cut off, which affects the travelling state of the vehicle.

Furthermore, in the current purely electric or hybrid-power new-energy vehicles, because the rotor shaft and the input shaft are not integral, which results in that the impact on the rotor shaft of the electric motor is large, conventional friction clutches cannot be employed. The employed clutch can only be the mode of hard connection, and does not have the function of cushioning, which cannot satisfy the requirements of new-energy vehicles.

In the conventional vehicles of the mode of direct driving by an electric motor, the power system does not have the clutching function, the traditional inertia friction synchronizer cannot be used, and the transmission cannot shift gear, and can only use a single speed ratio. The start-up and the stopping of the entire vehicle can only rely on the start-up and the stopping of the electric motor, which affects the exploiting of the performance of the electric motor. Because the conventional vehicles mostly employ a single power source, the conventional vehicles commonly have the defect of insufficient power in working conditions that require an increased torque such as starting up.

### SUMMARY

Aiming at the above problems in the prior art, an object of the present disclosure is to provide a longitudinal dual-power-source vehicle drive assembly, which is provided with dual power sources and an automatic transmission, and can solve the problem of single-power-source vehicles of insufficient power in working conditions that require an increased torque such as starting up, and at the same time selectively solve the problem of conventional transmissions of power interruption in gear shifting. The system has the advantages of a light weight and a good integration level, and is suitable for light-type, medium-type and heavy-type commercial vehicles.

To achieve the above object, the technical solutions of the present disclosure are realized as follows:
A longitudinal dual-power-source vehicle drive assembly, wherein the longitudinal dual-power-source vehicle drive assembly comprises an automatic transmission, a first power source and a second power source, a transmission input shaft and a transmission output shaft of the automatic transmission are coaxial, the transmission input shaft is connected to an output shaft of the first power source, the transmission output shaft is connected to an input shaft of the second power source, an output shaft of the second power source is connected to a vehicle axle half shaft, and the automatic transmission has transmissions of two speed ratios.

An intermediate shaft that is parallel to the transmission input shaft and the transmission output shaft is provided inside the automatic transmission, the intermediate shaft is connected to the transmission input shaft and the transmission output shaft via a first gear train and a second gear train respectively, the transmission output shaft is provided with a first clutch that is connected to the first gear train, the transmission output shaft or the intermediate shaft is provided with a second clutch that is connected to the second gear train, and cooperation between the first clutch and the second clutch realizes switching between the transmissions of two speed ratios of the automatic transmission.

When the second clutch is provided on the transmission output shaft, the first clutch and the second clutch are a bifacial clutch of an integral structure.

The first gear train comprises a first gear that is provided on the transmission input shaft and a second gear that is provided on the intermediate shaft and is engaged with the first gear, and the first gear is connected to the first clutch.

The second gear train comprises a third gear that is provided on the intermediate shaft and a fourth gear that is provided on the transmission output shaft and is engaged with the third gear, and when the third gear is idle-nested to the intermediate shaft and the fourth gear is fixedly connected to the transmission output shaft, the second clutch is provided on the intermediate shaft and is connected to the third gear; and when the third gear is fixedly connected to the intermediate shaft and the fourth gear is idle-nested to the transmission output shaft, the second clutch is provided on the transmission output shaft and is connected to the fourth gear.

A transmission ratio of the first gear train is i1, a transmission ratio of the second gear train is i2, and when the first clutch is disengaged and the second clutch is engaged, an engagement transmission ratio of the automatic transmission is ilxi2.

Both of the first clutch and the second clutch are a contrate-tooth clutch.

The output shaft of the first power source and the transmission input shaft are coaxial and are of an integral structure, and the input shaft of the second power source and the transmission output shaft are coaxial and are of an integral structure.

The second power source is an electric motor, and the first power source is an engine, an electric motor or a combination of an engine and an ISG electric machine.

An intermediate shaft that is parallel to the transmission input shaft and the transmission output shaft is provided inside the automatic transmission, the intermediate shaft is connected in transmission to the transmission input shaft via a first gear train, and the intermediate shaft is connected in transmission to the transmission output shaft via a second gear train.

The present disclosure has the following advantages and advantageous effects. The vehicle power assembly according to the present disclosure is connected to the rear axle half shaft or the front axle half shaft of the vehicle, and the vehicle power assembly can realize dual-power-source inputting and transmissions of multiple speed ratios, and has flexible transmission modes and power inputting modes, which satisfies the demands of the entire vehicle on travelling on different road conditions. When the vehicle is climbing while burdened with a weight, the dual-power inputting and the transmission of the larger speed ratio may be selected, to increase the driving force of the entire vehicle, to overcome the defect of the insufficient driving force of the entire vehicle. When the entire vehicle is in the cruising state, the single power inputting and the transmission of the smaller speed ratio may be selected, to satisfy the requirement on the high-speed travelling of the entire vehicle, save energy, and increase the endurance mileage of the vehicle.

The vehicle can shift gear while the first power source and the second power source are working simultaneously, which guarantees that the power of the vehicle is not interrupted. When the vehicle starts, the first power source and the second power source can start up simultaneously, to increase the total driving force of the drive assembly, shorten the accelerating process of the vehicle, and more quickly realize high-speed travelling. The design mode of the combination of the torsional vibration absorber and the contrate-tooth clutch can reduce the loss of kinetic energy to the largest extent, which overcomes the defect of conventional friction clutches of a too short life due to the incapacity of withstanding the dynamic shock from the electric motor.

### BRIEF DESCRIPTION OF THE DRAWINGS

Fig. 1 is a schematic structural diagram according to the first embodiment of the present disclosure;
Fig. 2 is a schematic structural diagram according to the second embodiment of the present disclosure;
Fig. 3 is a schematic structural diagram according to the third embodiment of the present disclosure;
Fig. 4 is a schematic structural diagram according to the fourth embodiment of the present disclosure;
Fig. 5 is a schematic structural diagram according to the fifth embodiment of the present disclosure; and
Fig. 6 is a schematic structural diagram according to the sixth embodiment of the present disclosure.

In the drawings: 10. automatic transmission; 11. first gear; 12. second gear; 13. third gear; 14. fourth gear; 21. transmission input shaft; 22. output shaft of second power source; 31. intermediate shaft; 32. transmission output shaft; 41. second clutch; 42. first clutch; 43. bidirectional clutch; 50. vehicle axle; 61. engine; 62. ISG electric machine; 63. torsional shock absorber; 71. first power source; and 72. second power source.

### DETAILED DESCRIPTION

Currently, the power characteristics of the electric motors employed by purely electric or hybrid-power new-energy vehicles have gaps with the requirements of the entire vehicles, and cannot satisfy the requirements on the speed ratios and the moments. Usually a single power source is provided, and the single power source is connected to a transmission. In gear shifting the clutch is required to be disengaged, and the power is interrupted, in which case the power connection between the input shaft and the output shaft is cut off, which affects the travelling state of the vehicle.

In order to solve the problem of single-power-source vehicles of insufficient power in working conditions that require an increased torque such as starting up, the present disclosure selectively solves the problem of conventional transmissions of power interruption in gear shifting, and the vehicle power assembly according to the present disclosure can realize dual-power-source inputting and transmissions of multiple speed ratios, and has flexible transmission modes and power inputting modes, which satisfies the demands of the entire vehicle on travelling on different road conditions.

In order to make the objects, the technical solutions and the advantages of the present disclosure clearer, the embodiments of the present disclosure will be described below in further detail in conjunction with the drawings.

### The first embodiment

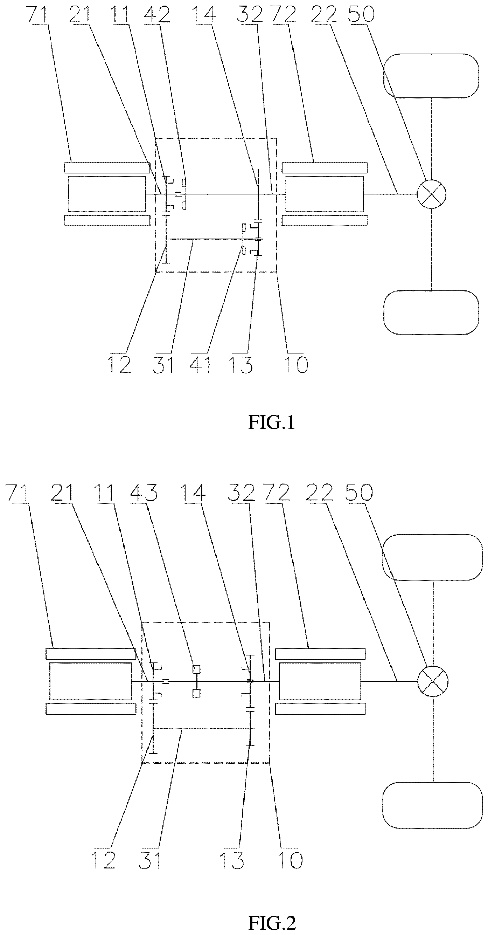

As shown in Fig. 1, a longitudinal dual-power-source vehicle drive assembly according to the present disclosure comprises an automatic transmission 10, a first power source 71 and a second power source 72, a transmission input shaft 21 and a transmission output shaft 32 of the automatic transmission 10 are coaxial, the transmission input shaft 21 is connected to an output shaft of the first power source 71, the transmission output shaft 32 is connected to an input shaft of the second power source 72, an output shaft of the second power source 72 is connected to a vehicle axle half shaft, and the automatic transmission 10 has transmissions of two speed ratios.

The output shaft of the first power source 71 and the transmission input shaft 21 are coaxial, and are of an integral structure. The input shaft of the second power source 72 and the transmission output shaft 32 are coaxial, and are of an integral structure.

An intermediate shaft 31 that is parallel to the transmission input shaft 21 and the transmission output shaft 32 is provided inside the automatic transmission 10, the intermediate shaft 31 is connected to the transmission input shaft 21 and the transmission output shaft 32 via a first gear train and a second gear train respectively, the transmission output shaft 32 is provided with a first clutch 42 that is connected to the first gear train, the intermediate shaft 31 is provided with a second clutch 41 that is connected to the second gear train, and the cooperation between the first clutch 42 and the second clutch 41 realizes the switching between the transmissions of two speed ratios of the automatic transmission 10.

The first gear train comprises a first gear 11 that is provided on the transmission input shaft 21 and a second gear 12 that is provided on the intermediate shaft 31 and is engaged with the first gear 11, and the first gear 11 is connected to the first clutch 42.

The second gear train comprises a third gear 13 that is provided on the intermediate shaft 31 and a fourth gear 14 that is provided on the transmission output shaft 32 and is engaged with the third gear 13, and when the third gear 13 is idle-nested to the intermediate shaft 31 and the fourth gear 14 is fixedly connected to the transmission output shaft 32, the second clutch 41 is provided on the intermediate shaft 31 and is connected to the third gear 13.

The engagement transmission ratio between the first gear 11 and the second gear 12 in the first gear train is i1. The engagement transmission ratio between the third gear 13 and the fourth gear 14 in the second gear train is i2. When the first clutch 42 is disengaged and the second clutch 41 is engaged, the engagement transmission ratio of the automatic transmission 10 is i1×i2. When the second clutch is disengaged and the first clutch is engaged, the engagement transmission ratio of the automatic transmission 10 is 1.

The first clutch 42 and the second clutch 41 are contrate-tooth clutches, which comprise a movable fluted disc and a fixed fluted disc that are in engagement transmission. The movable fluted disc is provided with contrate transmission teeth or tooth spaces, and the fixed fluted disc is correspondingly provided with contrate tooth spaces or transmission teeth. The contrate-tooth clutch, as compared with friction clutches, can reduce the loss of kinetic energy to the largest extent, which overcomes the defect of conventional friction clutches of a too short life due to the incapacity of withstanding the dynamic shock from the electric motor. The driving mode of the contrate-tooth clutch may be of an electromagnetic driving type (by being driven by the attraction of an electromagnet), or of a hydraulic driving type (by being driven by a hydraulic mechanism), or of a pneumatic driving type (by being driven by a pneumatic mechanism), or of an electric driving type (by being driven by an electric motor), for driving the movable fluted disc to axially move to be engaged with the fixed fluted disc. In a case where the second clutch 41 and the first clutch 42 are electromagnetic dog clutches, when the vehicle drive assembly inputs power, the electromagnetic dog clutches enable the power and the entire vehicle to be instantaneously disengaged or engaged at any time, which realizes the smooth switching of the power, and increases the traveling stability of the vehicle. The electromagnets corresponding to the electromagnetic dog clutches may be of an integral-ring type, and may also be of a separated-crescent type or another type.

The first clutch 42 comprises a left contrate-tooth fluted disc. The second clutch 41 comprises a right contrate-tooth fluted disc. The second clutch 41, including the right contrate-tooth fluted disc, may slide on the intermediate shaft 31. The first clutch 42, including the left contrate-tooth fluted disc, may slide on the transmission output shaft 32. They may be fitted via a spline. The first gear 11 is provided with right contrate teeth. The third gear 13 is provided with left contrate teeth. The right contrate teeth of the second clutch 41 slide rightwardly to join with the left contrate teeth of the third gear 13, to engage the second clutch 41. The left contrate teeth of the first clutch 42 slide leftwardly to join with the left contrate teeth of the first gear 11, to engage the first clutch 42.

The transmission input shaft 32 and an output shaft 22 of the second power source is provided coaxially with the output shaft of the first power source. The fourth gear 14 and the first clutch 42 are provided on the transmission output shaft 32. The transmission output shaft 32 and the input shaft of the second power source 72 are integral. The output shaft 22 of the second power source is connected to the vehicle axle 50. The vehicle axle 50 drives the wheel via the half shaft.

The mode of the power transmission of the drive assembly is as follows.

When the first clutch 42 is disengaged and the second clutch 41 is engaged, the power of the output shaft of the first power source is transmitted to the transmission output shaft 32 via the first gear 11, the second gear 12, the second clutch 41, the third gear 13 and the fourth gear 14, and additionally the power of the second power source 72 is transmitted to the vehicle axle 50 via the output shaft 22 of the second power source. In a case where the engagement transmission ratio between the first gear 11 and the second gear 12 is i1, and the engagement transmission ratio between the third gear 13 and the fourth gear 14 is i2, when the second clutch 41 is engaged and the first clutch 42 is disengaged, the transmission ratio of the automatic transmission 10 is i1×i2. That is the first working condition.

When the second clutch 41 is disengaged and the first clutch 42 is engaged, the power of the output shaft of the first power source is transmitted directly to the output shaft 32 of the automatic transmission via the first clutch 42, and additionally the power of the second power source 72 is transmitted to the vehicle axle 50 via the output shaft 22 of the second power source. When the second clutch 41 is disengaged and the first clutch 42 is engaged, the transmission ratio of the automatic transmission 10 is 1. That is the second working condition. When the second clutch 41 is disengaged and the first clutch 42 is disengaged, neutral position is implemented in the automatic transmission 10, and the drive assembly is being driven by a single power source. The magnitudes of the transmission ratios i1 and i2 may be changed by changing the sizes or the tooth numbers of the gears, thereby changing the transmission ratio of the automatic transmission 10.

It can be known from the above that the vehicle drive assembly can realize dual-power-source driving, single-power-source driving and transmissions of two speed ratios, and the automatic transmission, according to a control strategy program, can realize the electrically controlled automatic gear shifting between the two gears, which results in flexible transmission modes, and satisfies the demands of the entire vehicle on travelling on different road conditions. When the vehicle is climbing while burdened with a weight, the dual-power-source driving and the transmission of the larger speed ratio may be selected, to increase the driving force of the entire vehicle, to overcome the defect of the insufficient driving force of the entire vehicle. When the entire vehicle is in the cruising state, the single-power-source driving or the transmission of the smaller speed ratio may be selected, to satisfy the requirement on the high-speed travelling of the entire vehicle, save energy, and increase the endurance mileage of the vehicle. Furthermore, when the vehicle starts, the first power source 71 and the second power source 72 start up simultaneously, and the automatic transmission 10 employs the first working condition with the larger speed ratio, which can increase the total driving force of the drive assembly, shorten the accelerating process of the vehicle, and more quickly realize high-speed travelling.

In the first embodiment of the present disclosure, the vehicle axle half shaft may be the front axle half shaft or the rear axle half shaft. When the vehicle drive assembly is connected to the front axle half shaft, the vehicle is in a front driving mode, and when the vehicle drive assembly is connected to the rear axle half shaft, the vehicle is in a rear driving mode.

### The second embodiment

The present embodiment is a variation made on the basis of the first embodiment, and differs in the structure of the shifting clutches.

As shown in Fig. 2, the third gear 13 in the second gear train is fixedly connected to the intermediate shaft 31, the fourth gear 14 is idle-nested to the transmission output shaft 32, and the second clutch 41 is provided on the transmission output shaft 32, and is of an integral structure with the first clutch 42, to form a bidirectional clutch 43.

The bidirectional clutch 43 comprises a dual-contrate-tooth combined fluted disc. The dual-contrate-tooth combined fluted disc may slide on the transmission output shaft 32. They may be fitted via a spline. The first gear 11 is provided with right contrate teeth. The fourth gear 14 is provided with left contrate teeth. The fourth gear 14 is idle-nested to the output shaft 32 of the automatic transmission. The dual-contrate-tooth combined fluted disc slides rightwardly to be engaged with the left contrate teeth of the fourth gear 14. The power of the output shaft of the first power source is transmitted to the transmission output shaft 32 via the first gear 11, the second gear 12, the third gear 13, the fourth gear 14 and the bidirectional clutch 43, and additionally the power of the second power source 72 is transmitted to the vehicle axle 50 via the output shaft 22 of the second power source. In a case where the engagement transmission ratio between the first gear 11 and the second gear 12 is i1, and the engagement transmission ratio between the third gear 13 and the fourth gear 14 is i2, the transmission ratio of the automatic transmission 10 is i1×i2. That is the first working condition.

The dual-contrate-tooth combined fluted disc slides leftwardly to be engaged with the right contrate teeth of the first gear 11. The power of the output shaft of the first power source is transmitted directly to the output shaft 32 of the automatic transmission via the bidirectional clutch 43, and additionally the power of the second power source 72 is transmitted to the vehicle axle 50 via the output shaft 22 of the second power source. At this point, the transmission ratio of the automatic transmission 10 is 1. That is the second working condition.

The other structures of the present embodiment are the same as those of the first embodiment, and are not described repeatedly here.

### The third embodiment

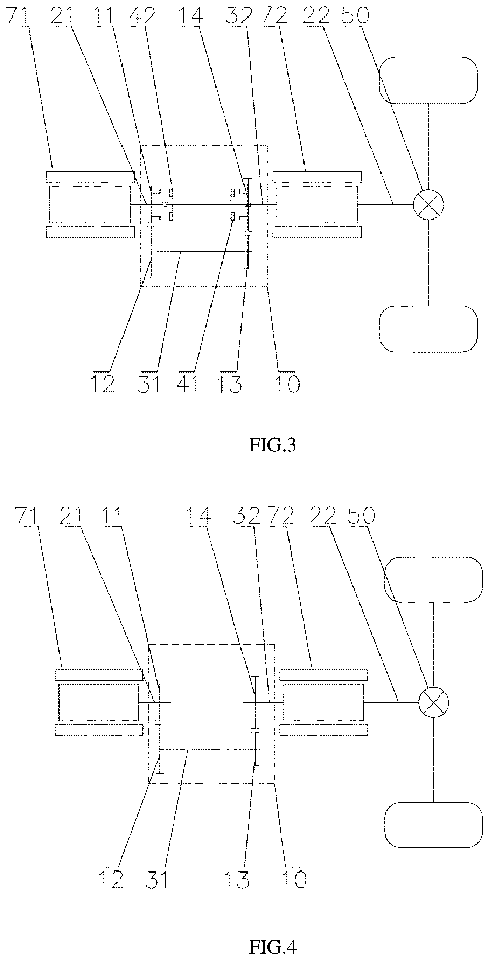

The present embodiment is a variation made on the basis of the second embodiment, and differs in the structure of the shifting clutches. As shown in Fig. 3, the first clutch 42 cooperates with the first gear 11, and the second clutch 41 cooperates with the fourth gear 14. The first clutch 42 comprises a left contrate-tooth fluted disc. The second clutch 41 comprises a right contrate-tooth fluted disc. The left contrate-tooth fluted disc and the right contrate-tooth fluted disc may individually slide on the transmission output shaft 32. They may be fitted via a spline. The first gear 11 is provided with right contrate teeth. The fourth gear 14 is provided with left contrate teeth. The fourth gear 14 is idle-nested to the transmission output shaft 32. The second clutch 41 slides rightwardly to be engaged with the left contrate teeth of the fourth gear 14. The power of the output shaft of the first power source is transmitted to the transmission output shaft 32 via the first gear 11, the second gear 12, the third gear 13, the fourth gear 14 and the second clutch 41, and additionally the power of the second power source 72 is transmitted to the vehicle axle 50 via the output shaft 22 of the second power source. In a case where the engagement transmission ratio between the first gear 11 and the second gear 12 is i1, and the engagement transmission ratio between the third gear 13 and the fourth gear 14 is i2, the transmission ratio of the automatic transmission 10 is i1×i2. That is the first working condition.

The first clutch 42 slides leftwardly to be engaged with the left contrate teeth of the first gear 11. The power of the output shaft of the first power source is transmitted directly to the output shaft 32 of the automatic transmission via the first clutch 42, and additionally the power of the second power source 72 is transmitted to the vehicle axle 50 via the output shaft 22 of the second power source. At this point, the transmission ratio of the automatic transmission 10 is 1. That is the second working condition.

The other structures of the present embodiment are the same as those of the first embodiment, and are not described repeatedly here.

### The fourth embodiment

As shown in Fig. 4, the present embodiment is another variation made on the basis of the first embodiment. The present embodiment is a speed reducer having a fixed speed ratio, and does not have the second clutch 41 and the first clutch 42, and the third gear 13 is fixedly connected to the intermediate shaft 31. The speed ratios of the gears may be changed by changing the sizes or the tooth numbers of the gears, thereby changing the transmission ratio of the automatic transmission 10. The control strategy is simpler, and the dual-power-source driving and the transmission of the larger speed ratio increase the driving force of the entire vehicle, which can overcome the defect of the insufficient driving force of the entire vehicle.

The other structures of the present embodiment are the same as those of the first embodiment, and are not described repeatedly here.

### The fifth embodiment

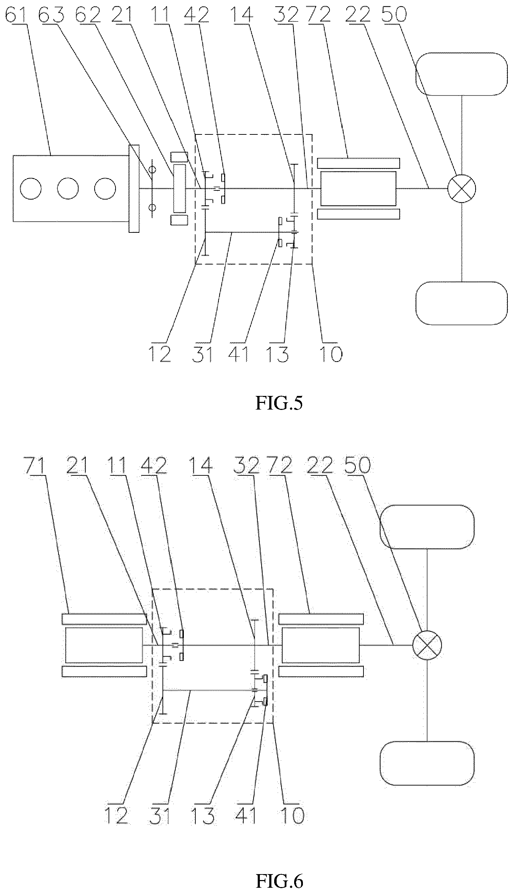

As shown in Fig. 5, the present embodiment is a variation made on the basis of the first embodiment. The first power source is an engine 61 and an ISG electric machine 62. In an aspect, the idle-speed loss and the pollution of the engine are reduced. In another aspect, the ISG electric machine serves as an electric generator, and can regeneratively generate electricity and recover energy, to save energy. A torsional vibration absorber 63 is provided between the engine 61 and the ISG electric machine 62, and can have the function of cushioning, and reduce the torsional rigidity at the connection between the engine and the ISG electric machine, thereby reducing the inherent frequency of torsional vibration, and eliminating torsional vibration.

### The sixth embodiment

As shown in Fig. 6, the present embodiment is a variation made on the basis of the first embodiment, and differs in the structure and the position of the second clutch 41, wherein the second clutch 41 is on the right of the third gear 13. The second clutch 41 is provided on the intermediate shaft 31. The second clutch 41, including the left contrate-tooth fluted disc, may slide on the intermediate shaft 31. They may be fitted via a spline. The third gear 13 is provided with right contrate teeth. The second clutch 41, including the left contrate teeth, slides leftwardly to join with the right contrate teeth of the third gear 13, to engage the second clutch 41.

The other structures of the present embodiment are the same as those of the first embodiment, and are not described repeatedly here.

The vehicle power assembly according to the present disclosure is connected to the rear axle half shaft or the front axle half shaft of the vehicle, and the vehicle power assembly can realize dual-power-source inputting and transmissions of multiple speed ratios, and has flexible transmission modes and power inputting modes, which satisfies the demands of the entire vehicle on travelling on different road conditions. When the vehicle is climbing while burdened with a weight, the dual-power inputting and the transmission of the larger speed ratio may be selected, to increase the driving force of the entire vehicle, to overcome the defect of the insufficient driving force of the entire vehicle. When the entire vehicle is in the cruising state, the single power inputting and the transmission of the smaller speed ratio may be selected, to satisfy the requirement on the high-speed travelling of the entire vehicle, save energy, and increase the endurance mileage of the vehicle.

The present disclosure realizes functions of direct driving and speed change of dual electric motors and direct driving and deceleration of dual electric motors, forms transmissions of multiple speed ratios, has flexible transmission modes, reduces the radial dimension of the drive assembly, and has no power interruption in gear shifting, which improves the riding comfort, the power performance, the acceleration performance and the gradeability of the vehicle.

The above are merely embodiments of the present disclosure, and are not limiting the protection scope of the present disclosure. Any modifications, equivalent substitutions, improvements and extensions that are made within the spirit and principle of the present disclosure should fall within the protection scope of the present disclosure.

## Claims

1. A longitudinal dual-power-source vehicle drive assembly, **characterized in that**: the longitudinal dual-power-source vehicle drive assembly comprises an automatic transmission (10), a first power source (71) and a second power source (72), a transmission input shaft (21) and a transmission output shaft (32) of the automatic transmission (10) are coaxial, the transmission input shaft (21) is connected to an output shaft of the first power source (71), the transmission output shaft (32) is connected to an input shaft of the second power source (72), an output shaft of the second power source (72) is connected to a vehicle axle (50) half shaft, and the automatic transmission (10) has transmissions of two speed ratios.

2. The longitudinal dual-power-source vehicle drive assembly according to claim 1, **characterized in that**: an intermediate shaft (31) that is parallel to the transmission input shaft (21) and the transmission output shaft (32) is provided inside the automatic transmission (10), the intermediate shaft (31) is connected to the transmission input shaft (21) and the transmission output shaft (32) via a first gear train and a second gear train respectively, the transmission output shaft (32) is provided with a first clutch (42) that is connected to the first gear train, the transmission output shaft (32) or the intermediate shaft (31) is provided with a second clutch (41) that is connected to the second gear train, and cooperation between the first clutch (42) and the second clutch (41) realizes switching between the transmissions of two speed ratios of the automatic transmission (10).

3. The longitudinal dual-power-source vehicle drive assembly according to claim 2, **characterized in that**: when the second clutch (41) is provided on the transmission output shaft (32), the first clutch (42) and the second clutch (41) are a bifacial clutch of an integral structure.

4. The longitudinal dual-power-source vehicle drive assembly according to claim 2, **characterized in that**: the first gear train comprises a first gear (11) that is provided on the transmission input shaft (21) and a second gear (12) that is provided on the intermediate shaft (31) and is engaged with the first gear (11), and the first gear (11) is connected to the first clutch (42).

5. The longitudinal dual-power-source vehicle drive assembly according to claim 2, **characterized in that**: the second gear train comprises a third gear (13) that is provided on the intermediate shaft (31) and a fourth gear (14) that is provided on the transmission output shaft (32) and is engaged with the third gear (13), and when the third gear (13) is idle-nested to the intermediate shaft (31) and the fourth gear (14) is fixedly connected to the transmission output shaft (32), the second clutch (41) is provided on the intermediate shaft (31) and is connected to the third gear (13); and when the third gear (13) is fixedly connected to the intermediate shaft (31) and the fourth gear (14) is idle-nested to the transmission output shaft (32), the second clutch (41) is provided on the transmission output shaft (32) and is connected to the fourth gear (14).

6. The longitudinal dual-power-source vehicle drive assembly according to claim 2, **characterized in that**: a transmission ratio of the first gear train is i1, a transmission ratio of the second gear train is i2, and when the first clutch (42) is disengaged and the second clutch (41) is engaged, an engagement transmission ratio of the automatic transmission (10) is i1×i2.

7. The longitudinal dual-power-source vehicle drive assembly according to claim 2, **characterized in that**: both of the first clutch (42) and the second clutch (41) are a contrate-tooth clutch.

8. The longitudinal dual-power-source vehicle drive assembly according to claim 1, **characterized in that**: the output shaft of the first power source (71) and the transmission input shaft (21) are coaxial and are of an integral structure, and the input shaft of the second power source (72) and the transmission output shaft (32) are coaxial and are of an integral structure.

9. The longitudinal dual-power-source vehicle drive assembly according to claim 1, **characterized in that**: the second power source (72) is an electric motor, and the first power source (71) is an engine (61), an electric motor or a combination of an engine (61) and an ISG electric machine (62).

10. The longitudinal dual-power-source vehicle drive assembly according to claim 1, **characterized in that**: an intermediate shaft (31) that is parallel to the transmission input shaft (21) and the transmission output shaft (32) is provided inside the automatic transmission (10), the intermediate shaft (31) is connected in transmission to the transmission input shaft (21) via a first gear train, and the intermediate shaft (31) is connected in transmission to the transmission output shaft (32) via a second gear train.
